**Europäisches Patentamt**

**European Patent Office**

**Office européen des brevets**

(19)

(11) Numéro de publication: **0 193 438**
**B1**

# (12) FASCICULE DE BREVET EUROPÉEN

(45) Date de publication du fascicule du brevet:
**25.01.89**

(21) Numéro de dépôt: **86400230.8**

(22) Date de dépôt: **04.02.86**

(51) Int. Cl.⁴: **F 16 L 37/08**

(54) **Raccord rapide à verrouillage par verrou à déplacement radial.**

(30) Priorité: **08.02.85 FR 8501835**

(43) Date de publication de la demande:
**03.09.86 Bulletin 86/36**

(45) Mention de la délivrance du brevet:
**25.01.89 Bulletin 89/4**

(84) Etats contractants désignés:
**BE CH DE GB IT LI SE**

(56) Documents cité:
**FR-A-1 363 394**
**FR-A-1 487 324**

(73) Titulaire: **Frémy, Raoul, Villa Emilia 17, Rue Cécile Vallet, F-92340 Bourg La Reine (FR)**

(72) Inventeur: **Frémy, Raoul, Villa Emilia 17, Rue Cécile Vallet, F-92340 Bourg La Reine (FR)**

(74) Mandataire: **Lemonnier, André, 4 Boulevard Saint-Denis, F-75010 Paris (FR)**

EP 0 193 438 B1

LIBER, STOCKHOLM 1989

## Description

On connaît de nombreux modèles de raccords rapides présentant, dans la périphérie de l'élément mâle, une gorge dont le flanc avant est sensiblement perpendiculaire à l'axe et, dans l'élément femelle, un verrou susceptible de recevoir un déplacement axial et dont le flanc arrière vient au verrouillage s'engager derrière le flanc avant de l'élément mâle. Le verrouillage est, dans ces modèles de raccord, assuré par un encliquetage automatique, le verrou étant sollicité élastiquement par un ressort dans la direction radiale de verrouillage et le nez de l'élément mâle présentant une rampe tronconique avec laquelle vient coopérer une rampe prévue sur le verrou pour écarter le cliquet de sa position de verrouillage jusqu'à ce que le cliquet retombe dans la gorge de l'élément mâle.

Dans de nombreux modes de réalisation et par exemple comme décrit dans FR-A-1 402 040, le déplacement du verrou pour assurer le déverrouillage contre la poussée du ressort s'effectue en repoussant le verrou constitué par une bague cylindrique par enfoncement d'un poussoir accessible à travers un orifice dans la surface périphérique de l'élément femelle. Ce mode de réalisation présente l'inconvénient que le poussoir peut être enfoncé accidentellement et surtout que le déplacement du verrou sous l'action du ressort peut être bloqué notamment par des salissures pénétrant dans le logement du poussoir.

Le raccord rapide du type concerné par l'invention décrit dans FR-A-1 363 394 ne présente pas les inconvénients ci-dessus du fait que le verrou est écarté de sa position de verrouillage, contre l'action du ressort, par un manchon axial monté dans l'élément femelle, manchon à l'intérieur duquel passe le nez de l'élément mâle, ce manchon pouvant être poussé axialement vers l'intérieur de l'élément femelle par action sur une chemise périphérique entourant ledit élément pour, par coopération de son extrémité tronconique avec une portée tronconique dans la face avant du verrou, déplacer radialement le verrou. Cette disposition présente toutefois l'inconvénient que ce manchon de déverrouillage augmente dans une forte proportion le diamètre de l'élément femelle pour une section de passage donnée du raccord.

Dans FR-A-1 487 324, on a proposé de réaliser le verrou sous forme d'une pièce qui coulisse dans un guidage du corps de l'embout femelle, l'extrémité du verrou à l'opposé du ressort de rappel coopérant avec une rampe ménagée dans la paroi interne d'une bague coulissant axialement pour que le verrou soit libre de venir en position d'encliquetage ou soit repoussé pour le déverrouillage contre l'action du ressort. Pour obtenir un positionnement précis du verrou en position de déverrouillage, le guidage du verrou coulissant doit s'effectuer sans jeu d'où des risques de grippage bloquant le verrou notamment en position déverrouillée.

On connaît également des raccords rapides à billes mais les billes qui s'engagent dans une gorge de l'élément mâle en étant repoussées par une bague coulissant longitudinalement sur le raccord femelle, constituent, par elles-mêmes, les organes de verrouillage.

Un inconvénient général des raccords rapides utilisés notamment pour le raccordement de canalisations de gaz sous pression est que la pression qui subsiste en règle générale dans la canalisation solidaire de l'élément mâle provoque, au moment du déverrouillage, une séparation brutale des éléments du raccord avec des déformations brutales des tuyaux souples.

On a déjà proposé par exemple dans CH-A-368 669 un raccord dans lequel le déverrouillage de l'élément mâle se fait en deux temps, le verrouillage étant assuré par deux rangées périphériques de billes s'engageant dans une gorge périphérique de grande largeur longitudinale de l'élément mâle, la bague de commande de l'éclipsage des billes comportant deux gorges périphériques internes parallèles. Le parfait fonctionnement des deux dispositifs de verrouillage étant, dans cette application, extrêmement important pour la sécurité, la transposition au cas du verrouillage par verrou à déplacement radial présentait le même problème qu'exposé ci-dessus avec des conséquences résultant d'un grippage d'un verrou qui pouvaient être très graves.

La présente invention a pour but de remédier aux inconvénients ci-dessus et notamment d'assurer un positionnement parfait du verrou dans la position de déverrouillage sans risque de coïncement du verrou dans l'une ou l'autre des deux positions, le verrou étant monté flottant.

Ce but est atteint, conformément à l'invention, par le fait qu'au moins deux billes montées avec une liberté de déplacement radial dans le corps de l'élément femelle, sont interposées entre au moins deux points de la périphérie du verrou symétriques par rapport à l'axe de poussée du ressort sollicitant le verrou et la rampe longitudinale réalisée sur la surface interne de la bague coulissante, le diamètre des billes étant égal à la distance radiale entre la surface de la bague coulissante correspondant au déverrouillage et la surface de la périphérie du verrou. La composante des forces de poussée des deux billes est dirigée contre l'action du ressort et les forces de poussée des deux billes ne sont équilibrées que lorsque le verrou est parfaitement centré entre les deux billes. On évite de ce fait la nécessité d'un guidage radial au coulissement sans jeu du verrou.

Selon un mode de réalisation préférentiel l'élément femelle comporte trois billes montées libres dans trois perçages radiaux situés l'un en face et selon l'axe de la poussée du ressort et les deux autres sur le diamètre perpendiculaire à cet axe, ces deux dernières assurant le centrage du verrou sur l'axe de poussée du ressort.

Selon un autre mode de réalisation, l'élément femelle comporte une pluralité de billes montées dans une saignée du corps en secteur de cercle symétrique par rapport à l'axe de poussée du ressort, la différence entre le rayon de la surface périphérique cylindrique du verrou et le rayon de la surface interne de la bague coopérant avec les billes en position de déverrouillage, étant égale au diamètre des billes et le développement périphérique de la saignée selon un cercle dont le rayon correspond au rayon de la surface périphérique du verrou augmenté du rayon d'une bille, étant sensiblement égal au diamètre d'une bille multiplié par le nombre de billes. Cette saignée lorsqu'elle est réalisée avec un développement voisin de 180° permet de plus l'introduction du verrou et de son ressort de rappel, latéralement dans le corps de l'élément femelle.

Le ressort de poussée radiale assurant le verrouillage peut être un ressort à boudin prenant appui dans un logement borgne. Selon un mode de réalisation préférentiel permettant de guider et maintenir le ressort dans un simple perçage, le ressort est réalisé par découpage et pliage d'une lame en acier à ressort de manière à former deux ailes en V opposées redressées vers le centre par rapport au corps en secteur cylindrique du ressort lequel prend appui sur la surface interne du corps cylindrique de l'élément femelle, lesdites ailes prenant appui sous le verrou et le guidage étant assuré par engagement d'un ergot central radial du corps du ressort dans un perçage radial du corps de l'élément femelle.

Deux verrous déplacés et guidés par des billes conformément à l'invention peuvent être montés en série longitudinalement dans le corps de l'élément femelle, les billes propres aux deux verrous coopérant successivement avec une nervure portée par la surface interne de la bague coulissante qui les repousse pour recentrer successivement l'un puis l'autre verrou et assurer un déverrouillage en deux temps.

L'invention sera décrite plus en détail ci-après sous forme de divers exemples de réalisation avec référence aux dessins ci-annexés dans lesquels:

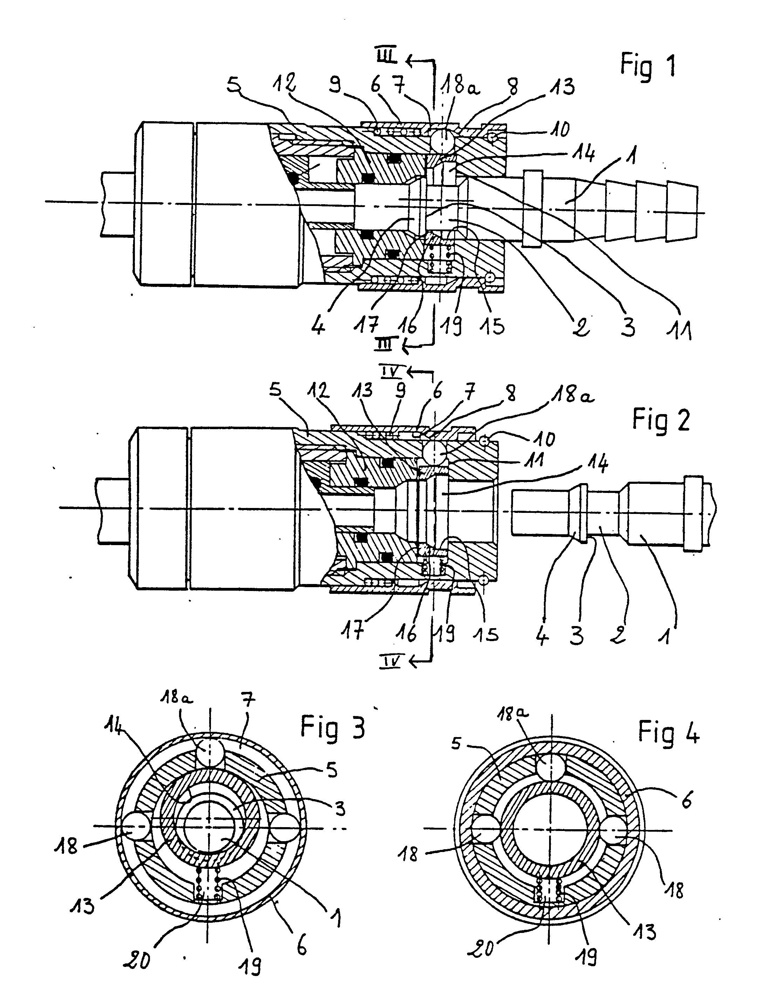

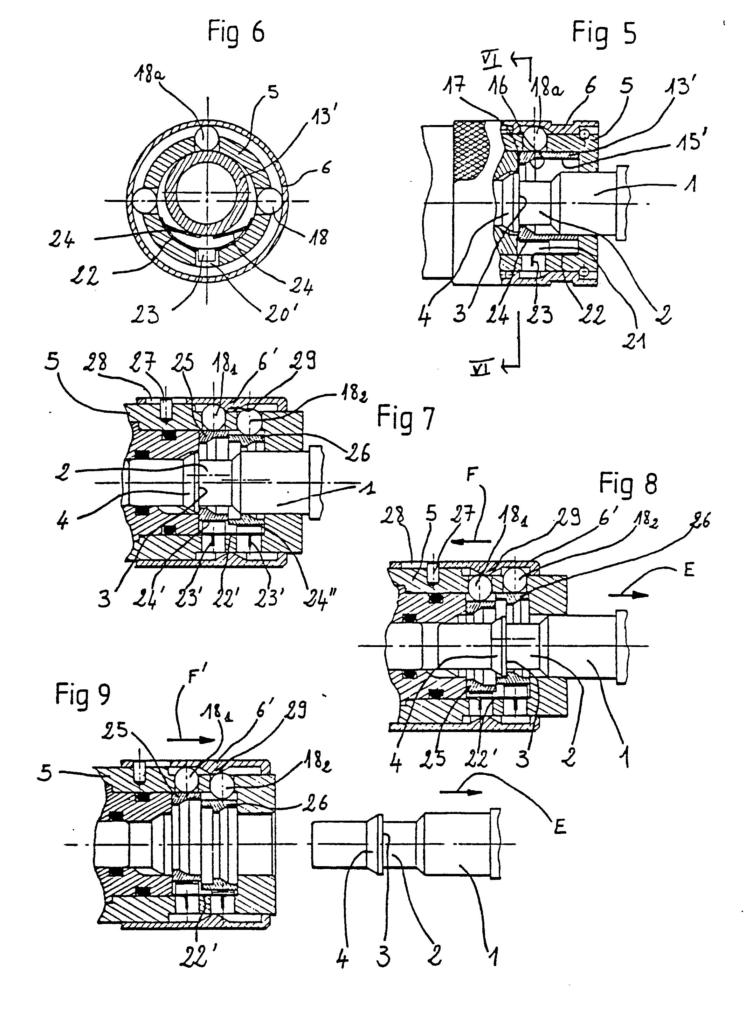

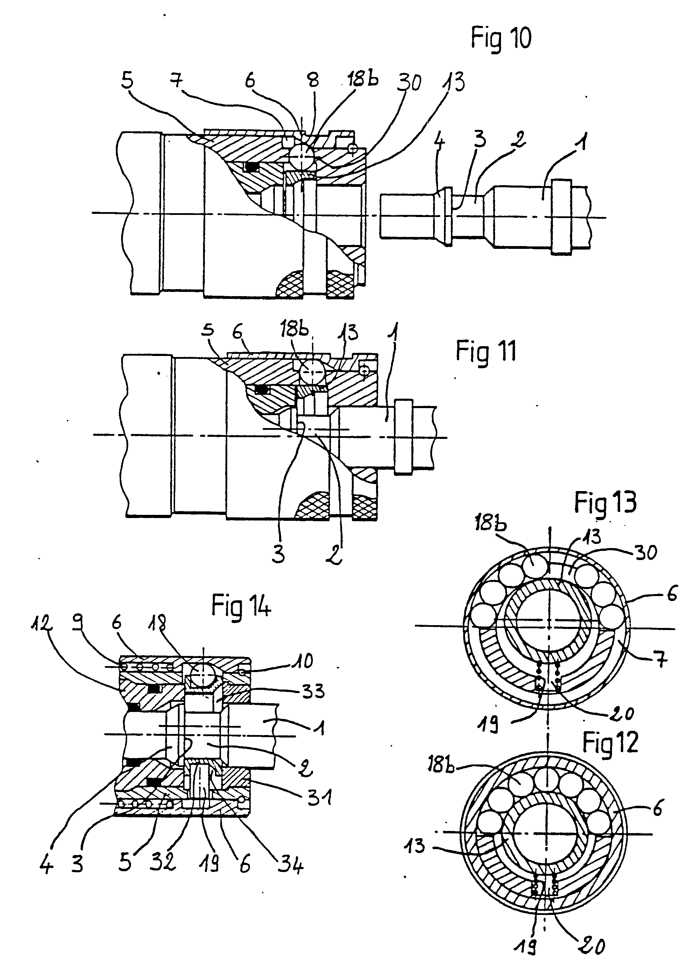

La figure 1 est une vue en coupe axiale partielle d'un raccord conforme à l'invention à l'état verrouillé; la figure 2 est une vue correspondante à l'état déverrouillé; la figure 3 est une vue en coupe par III - III de figure 1 et la figure 4 une vue en coupe par IV - IV de figure 2; la figure 5 est une vue correspondant à figure 1 pour un autre mode de réalisation et la figure 6 une vue en coupe par VI - VI de figure 5; la figure 7 est une vue en coupe partielle à l'état verrouillé d'un raccord comportant deux verrous en série, la figure 8 est une vue du même raccord après le premier stade du déverrouillage et la figure 9 une vue du même raccord après le deuxième stade de déverrouillage; la figure 10 est une vue correspondant à la figure 2 pour un mode de réalisation du raccord, la figure 11 est une vue correspondant à la figure 1 pour cet autre mode de réalisation du raccord et les figures 12 et 13 sont des vues en coupe transversale par le plan de l'anneau de verrouillage d'un raccord selon un autre mode de réalisation et la figure 14 est une vue en coupe correspondant à la figure 11 pour un autre mode de réalisation.

Dans les dessins, la référence 1 désigne l'élément mâle du raccord, la référence 2 la gorge de verrouillage à la périphérie de l'élément mâle, la référence 3 le flanc avant de cette gorge et la référence 4 la rampe tronconique qui, à l'emmanchement, écarte le verrou de sa position de verrouillage contre l'action du ressort de verrouillage. Dans les vues en coupe l'élément mâle n'est en général pas représenté.

Dans les dessins, la référence 5 désigne dans son ensemble l'élément femelle du raccord, la référence 6 la bague coulissante de commande du déverrouillage à l'extérieur de l'élément femelle.

Dans le mode de réalisation des figures 1 à 4, la bague 6 présente une gorge 7 de section trapézoïdale formant une rampe tronconique 8 vers l'avant, la bague étant sollicitée vers l'avant par un ressort 9 et arrêtée par un jonc 10.

Dans le corps de l'élément femelle est monté coulissant, entre une portée avant 11 du corps 5 et une fourrure 12 à l'intérieur de ce corps, un verrou 13. Ce verrou a la forme d'une bague cylindrique avec un alésage en gradins 14, la partie de l'alésage de plus grand diamètre 15 étant dirigée vers l'avant et réunie par une portée tronconique 16 à la partie de plus petit diamètre dont le flanc arrière 17 constitue le flanc de verrouillage qui coopère avec le flanc 3 de la gorge de l'élément femelle pour assurer le verrouillage.

Avec la surface périphérique du verrou 13 coopèrent trois billes 18 et un ressort 19. Les billes 18 sont serties dans trois perçages radiaux écartés de 90° du corps 5 et le ressort 19 est logé dans un perçage borgne 20 dudit corps. L'une des billes 18a se trouve sur le même diamètre que le ressort 19 et à l'opposé de celui-ci.

Le fonctionnement du verrouillage selon ce premier mode de réalisation est le suivant: sous l'action du ressort 9, la bague 6 est repoussée vers l'avant en butée contre le jonc 10 et la gorge 7 se trouve au droit des billes 18. Lesdites billes peuvent donc être repoussées dans la gorge 7 sous l'action du ressort 19 (Figs 1 et 3) et le verrou 13 est poussé vers la bille 18a en étant libre de battre dans son logement. Lorsqu'on introduit l'élément mâle 1 du raccord, celui-ci pénètre dans l'alésage 14 du verrou et la rampe tronconique 4 de l'élément mâle vient coopérer avec la rampe tronconique 16 du verrou 13 pour recentrer celui-ci contre l'action du ressort 19. Lorsque la face arrière 17 du verrou dépasse le flanc 3 de la gorge 2 de l'élément mâle, le verrou 13 s'engage dans ladite gorge sous l'action du ressort 19 pour assurer le verrouillage. Pour déverrouiller le raccord, on repousse la bague 6 contre l'action du ressort 9 et la rampe tronconique 8 repousse les trois billes 18 vers le centre en comprimant le ressort 19. Lorsque les billes 18 se trouvent sur la portée cylindrique de la bague 6, au-delà de la gorge 7 (Fig. 4), le verrou 13 est parfaitement centré et le flanc 17 du verrou est dégagé du flanc 3 de la gorge de l'élément mâle qui peut être retiré librement de l'élément femelle.

Le mode de réalisation des figures 5 et 6 se distingue du mode de réalisation ci-dessus par le fait que le verrou cylindrique 13' est plus long du fait notamment de l'allongement de l'alésage 15' et que le ressort 19 est remplacé par un ressort à lame désigné par la référence générale 21. Ce ressort comporte un corps en arc de cercle 22 qui s'adapte à l'intérieur du corps 5 de l'élément femelle et qui est centré par un tenon découpé et recourbé 23, lequel est engagé dans un perçage radial 20' identique aux perçages recevant les billes 18. Deux ailes 24 sont découpées de part et d'autre du tenon 23 et cintrées vers le centre pour venir en appui sous la partie 16 - 17 du verrou pour repousser ledit verrou en le centrant vers la bille 18a.

Le fonctionnement de ce mode de réalisation est identique à celui ci-dessus décrit pour le mode de réalisation des figures 1 à 4.

Dans le mode de réalisation des figures 7 à 9 deux verrous 25 - 26 sensiblement de même forme que le verrou 13 sont montés coulissants entre la portée 11 et la fourrure 12 du corps de l'élément femelle. Chaque verrou est soumis à l'action de trois billes respectivement $18_1$ - $18_2$ analogues aux billes 18 ci-dessus et à l'action d'un ressort constitué, dans le mode de réalisation représenté, par deux paires d'ailes 24', 24'' découpées dans un corps 22' centré par des tétons 23'.

La bague périphérique 6' de l'élément femelle du raccord coulisse librement en étant maintenue par un goujon 27 engagé dans une lumière longitudinale 28. La bague 6' présente une nervure de section trapézoïdale 29 qui se trouve au montage entre les deux rangées de billes $18_1$ - $18_2$.

A l'état désaccouplé du raccord les deux verrous 25 - 26 sont poussés en positions excentrées par les lames de ressort 23 - 23', les billes $18_1$ - $18_2$ étant en appui sur la surface intérieure de la bague 6' de part et d'autre de la nervure 29. Lors de l'enfoncement de l'élément mâle, la rampe tronconique 4 de l'élément mâle recentre le verrou 26 qui retombe ensuite dans la gorge 2 puis le verrou 25 qui retombe par son flanc avant derrière le flanc 3 de la gorge de l'élément mâle. Le raccord est alors verrouillé (Fig. 7). Pour le déverrouillage, on pousse la bague 6' dans le sens de la flèche F de la figure 8, la nervure 29 repoussant les billes $18_1$ pour amener le verrou 25 en position centrée. Le flanc 3 est alors dégagé du verrou 25 et l'élément mâle est repoussé dans le sens de la flèche E mais le flanc 3 vient accrocher le flanc prévu sur le verrou 26 et l'élément mâle 1 se trouve en position de demi-extraction dans laquelle une fuite peut être prévue pour mettre à l'échappement la pression régnant dans le raccord mâle 1. En repoussant la bague 6' dans la direction opposée de la flèche F', la rampe 29 repousse les billes $18_2$ contre l'action des lames élastiques 24' ce qui recentre le verrou 26. Lorsque le flanc de verrouillage du verrou 26 échappe au flanc 3 de la gorge 2 de l'élément mâle, ce dernier peut être extrait librement selon la flèche E (Fig. 9).

Le mode de réalisation des figures 10 et 11 permet de supprimer le ressort 9 de rappel de la bague de verrouillage 6. Pour ce faire le diamètre intérieur de la bague de verrouillage 6 et le diamètre extérieur du corps 5 au droit du plan diamétral des billes 18b est inférieur au diamètre de l'anneau de verrouillage 13 augmenté de deux fois le diamètre des billes 18b. De ce fait le recul de la bague de verrouillage 6 se trouve stoppé avant le bord avant de la rampe 8 et le rappel en position vers l'avant de la bague 6 est assuré par le ressort 19 qui agit simultanément sur l'anneau de verrouillage 13, la bille 18b et la rampe 8 de la bague 6.

Le mode de réalisation des figures 12 et 13 est analogue à celui des figures 1 à 4 et fonctionne d'une manière analogue mais les trois billes 18b sont remplacées par une pluralité de billes 18b (sept dans l'exemple représenté) qui sont logées dans une saignée en arc de cercle 30 du corps 5 de l'élément femelle du raccord. Le développement de cette saignée 30 est tel que lorsque les billes 18b sont au contact de la surface périphérique du verrou 13, elles sont en contact entre elles selon un cercle concentrique tant au verrou qu'à la bague 6 (Fig. 12), le verrou étant alors centré pour permettre le libre dégagement de l'élément mâle 1.

Dans le mode de réalisation de la figure 14, la portée avant 11 de l'élément femelle est remplacée par une fourrure rapportée 31 et le verrou 32 est constitué par une bague cylindrique comportant un chanfrein tronconique 33 du côté de l'entrée et une gorge périphérique 34 dans laquelle sont logés les billes 18 et le ressort 19. Ce mode de réalisation permet de réduire le diamètre d'ensemble de l'élément femelle du raccord.

## Revendications

1. Un raccord rapide à verrouillage par verrou à déplacement radial comportant dans la périphérie de l'élément mâle, une gorge dont le flanc avant est sensiblement perpendiculaire à l'axe et, dans l'élément femelle, un verrou susceptible de recevoir un déplacement axial et dont le flanc arrière vient au verrouillage s'engager derrière le flanc avant de l'élément mâle, le verrou etant sollicité élastiquement par un ressort dans la direction radiale de verrouillage et le nez de l'élément mâle présentant une rampe tronconique avec laquelle vient coopérer une rampe prévue sur le verrou, caractérisé en ce qu'au moins deux billes (18) montées avec une liberté de déplacement radial dans le corps (5) de l'élément femelle sont interposées entre au moins deux points de la périphérie du verrou (13) symétriques par rapport à l'axe de poussée du ressort (19) sollicitant le verrou et la rampe longitudinale (8) réalisée sur la surface interne de la bague coulissante (6), le diamètre des billes (18) étant égal à la distance radiale entre la surface de la bague coulissante (6) correspondant au déverrouillage et la surface de la périphérie du verrou (13).

2. Un raccord rapide selon la revendication 1, caractérisé en ce que l'élément femelle comporte trois billes (18, 18a) montées libres dans trois perçages radiaux situés l'un (18a) en face et selon l'axe de la poussée du ressort (19) et les deux autres (18) sur le diamètre perpendiculaire à cet axe, ces deux dernières assurant le centrage du verrou (13) sur l'axe de poussée du ressort (19).

3. Un raccord rapide selon la revendication 1, caractérisé en ce que l'élément femelle (5) comporte une pluralité de billes (18b) montées dans une saignée (30) du corps en secteur de cercle symétrique par rapport à l'axe de poussée du ressort (19), la différence entre le rayon de la surface périphérique cylindrique du verrou (13) et le rayon de la surface interne de la bague (6) coopérant avec les billes en position de déverrouillage, étant égale au diamètre des billes (18b) et le développement périphérique de la saignée selon un cercle dont le rayon correspond au rayon de la surface périphérique du verrou augmenté du rayon d'une bille, étant sensiblement égal au diamètre d'une bille multiplié par le nombre de billes.

4. Un raccord rapide selon l'une quelconque des revendications 1 à 4,
caractérisé en ce que le ressort de poussée radiale assurant le verrouillage est un ressort à boudin (19) prenant appui dans un logement borgne (20).

5. Un raccord rapide selon l'une quelconque des revendications 1 à 4,
caractérisé en ce que le ressort de poussée radiale est réalisé par découpage et pliage d'une lame en acier à ressort (22) de manière à former deux ailes en V opposées (24) redressées vers le centre par rapport au corps en secteur cylindrique du ressort lequel prend appui sur la surface interne du corps cylindrique (5) de l'élément femelle, lesdites ailes prenant appui sous le verrou (13) et le guidage étant assuré par engagement d'un ergot central radial (23) du corps (22) du ressort dans un perçage radial du corps (5) de l'élément femelle.

6. Un raccord rapide selon l'une quelconque des revendications 1 à 5,
caractérisé en ce que deux verrous (25 - 26) déplacés et guidés par des billes (18₁ - 18₂) sont montés en série longitudinalement dans le corps (5) de l'élément femelle, les billes (18₁ - 18₂) propres aux deux verrous coopérant successivement avec une nervure (29) portée par la surface interne de la bague coulissante (6) qui les repousse pour recentrer successivement l'un puis l'autre verrou (25 - 26) et assurer un déverrouillage en deux temps.

**Patentansprüche**

1. Riegelschnellverbinder mittels radial verschieblichem Riegel, der am Umfang des männlichen Elements eine Auskehlung aufweist, deren vordere Flanke im wesentlichen senkrecht zu der Achse verläuft, und in dem weiblichen Element einen Riegel aufweist, der geeignet ist, eine axiale Verschiebung auf zunehmen und dessen hintere Flanke beim Verriegeln in Anlage hinter der vorderen Flanke des männlichen Elements kommt, wobei der Riegel elastisch durch eine Feder in der radialen Verriegelungsrichtung beansprucht wird und die Nase des männlichen Elements eine kegelstumpfförmige Rampe aufweist, mit der eine an dem Riegel vorgesehene Rampe in Zusammenwirkung kommt, dadurch gekennzeichnet, daß wenigstens zwei mit einer in dem Körper (5) des weiblichen Elements mit einer radialen Verschiebemöglichkeit angeordnete Kugeln (18) zwischen wenigstens zwei Punkten des Umfangs des Riegels (13) symmetrisch bezüglich der Druckachse der Feder (19) angeordnet sind, die den Riegel und die Längsrampe (8) beaufschlagt, die auf der inneren Oberfläche des Gleitringes (6) ausgebildet ist, wobei der Durchmesser der Kugeln (18) gleich dem radialen Abstand zwischen der Oberfläche des Gleitringes (6) entsprechend der Freigabe und der Umfangsoberfläche des Riegels (13) ist.

2. Schnellverbinder nach Anspruch 1, dadurch gekennzeichnet, daß das weibliche Element drei Kugeln (18, 18a) aufweist, die frei in drei radialen Auskerbungen angeordnet sind, wobei eine (18a) gegenüber und entlang der Druckachse der Feder (19) und die beiden anderen (18) auf dem zu dieser Achse senkrechten Durchmesser angeordnet sind, wobei die beiden letzteren die Zentrierung des Riegels (13) auf der Druckachse der Feder (19) sicherstellen.

3. Schnellverbinder nach Anspruch 1, dadurch gekennzeichnet, daß das weibliche Element (5) eine Mehrzahl von Kugeln (18b) aufweist, die in einem kreisausschnittförmigen Einschnitt (30) des Körpers, der symmetrisch bezüglich der Druckachse der Feder (19) ist, angeordnet sind, wobei der Unterschied zwischen dem Radius der zylindrischen Umfangsfläche des Riegels (13) und dem Radius der inneren Oberfläche des Ringes (6), der mit den Kugeln in der Freigabestellung zusammenwirkt, gleich dem Durchmesser der Kugeln (18b) ist, und die Umfangsabwicklung des Einschnittes entlang eines Kreises, dessen Radius dem Radius der Umfangsfläche des Riegels vergrößert um den Radius einer Kugel entspricht, im wesentlichen gleich dem Durchmesser einer Kugel multipliziert mit der Anzahl der Kugeln ist.

4. Schnellverbinder nach einem der Ansprüche 1 bis 3, dadurch gekennzeichnet, daß die Feder des Radialdruckes, die die Verriegelung sicherstellt, eine Schraubenfeder (19) ist, die sich in einem Scheinlager (20) abstützt.

5. Schnellverbinder nach einem der Ansprüche 1 bis 4, dadurch gekennzeichnet, daß die radiale Druckfeder durch Schneiden und Falten eines Blattes (22) aus Federstahl derart gebildet ist, daß sie zwei gegenüberliegende Flügel (24) in Form eines V bildet, die zu dem Zentrum bezüglich des zylindrischen Körperabschnittes der Feder nachgerichtet sind, die sich auf der inneren Oberfläche des zylindrischen Körpers (5) des weiblichen Elements abstützt, wobei die Flügel sich unter dem Riegel (13) abstützen und die Führung durch Eingriff eines radialen Zentralvorsprungs (23) des Köpers (22) der Feder in einer Radialkerbe des Körpers (5) des weiblichen Elements sichergestellt ist.

6. Schnellverbinder nach einem der Ansprüche 1 bis 5, dadurch gekennzeichnet, daß zwei Riegel (25 - 26), die durch Kugeln (18₁ - 18₂) verschoben und geführt sind, in Längsreihe in dem Körper (5) des weiblichen Elements angeordnet sind, wobei die den beiden Riegeln zugeordneten Kugeln (18₁ - 18₂) aufeinanderfolgend mit einer Rippe (29) zusammenwirken, die von der inneren Oberfläche des Gleitringes (6) getragen wird, der sie zurückstößt, um aufeinanderfolgend den einen und dann den anderen Riegel (25 - 26) erneut zu zentrieren und eine Freigabe in zwei Schritten sicherzustellen.

**Claims**

1. A rapid action coupling latched by a radially movable bolt, including in the periphery of the male element a groove the front flank of which is substantially perpendicular to the axis and, in the female element, a bolt adapted for receiving an axial displacement and the rear flank of which engages, when latched, behind the front flank of the male element, the bolt being resiliently urged by a spring in the latching radial direction and the nose of the male element being formed with a frustoconical ramp with which cooperates a ramp formed on the bolt, characterized in that at least two balls (18) mounted with a radial displacement freedom in the body (5) of the female element are interposed between at least two points on the periphery of the bolt (13) which are symmetrical with respect to the pushing axis of the spring (19) urging the bolt and the longitudinal ramp formed in the inner surface of the sliding ring (6), the diameter of the balls (18) being equal to the radial distance between the sliding ring (6) surface corresponding to the unlatching and the surface of the periphery of the bolt (13).

2. A rapid action coupling according to claim 1, characterized in that the female element includes three balls (18, 18a) freely mounted in three radial bores, of which one (18a) is situated opposite and along the pushing axis of spring (19) and the two others (18) are on the diameter perpendicular to said axis, the two latter balls providing for the centering of the bolt (13) along the pushing axis of spring (19).

3. A rapid action coupling according to claim 1, characterized in that the female element (5) includes a plurality of balls (18b) mounted inside a groove (30) of the body, in the shape of sector of circle symmetrical with respect to the pushing axis of spring (19), the difference between the radius of the cylindrical peripheral surface of bolt (13) and the radius of the inner surface of ring (6) cooperating with the balls in the unlatched position being equal to the diameter of balls (18b), and the peripheral development of the groove according to a circle the radius of which corresponds to the radius of the peripheral surface of the bolt plus the radius of a ball being substantially equal to the diameter of a ball multiplied by the number of balls.

4. A rapid action coupling according to any one of claims 1 to 3, characterized in that the radial pushing spring providing for the latching is a helical spring (19) supported in a blind housing (20).

5. A rapid action coupling according to any one of claims 1 to 4, characterized in that the radial pushing spring is provided by cutting and folding a spring steel blade (22) so as to form two V-shaped wings (24) opposite and extending towards the center with respect to the spring cylindrical sector-shaped body on which bears the inner surface of the cylindrical body (5) of the female element, said wings bearing underneath bolt (13) and the guiding effect being provided by the engagement of a radial central lug (23) of the spring body (22) in a radial bore of the female element body (5).

6. A rapid action coupling according to any one of claims 1 to 5, characterized in that two bolts (25, 26) displaced and guided by balls (18₁ - 18₂) are mounted in series longitudinally in the female element body (5), the balls (18₁ - 18₂) which correspond to the two bolts cooperating successively with a rib (29) formed on the inner surface of the sliding ring (6) which pushes them back in order to recenter successively one bolt and then the other (25 - 26), and to provide a two stages unlatching.

Fig 1

Fig 2

Fig 3

Fig 4

Fig 6

Fig 5

Fig 7

Fig 8

Fig 9

Fig 10

Fig 11

Fig 13

Fig 14

Fig 12